Europäisches Patentamt

(19) European Patent Office

Office européen des brevets

(11) **EP 0 903 928 A2**

## (12) EUROPEAN PATENT APPLICATION

(43) Date of publication:
24.03.1999 Bulletin 1999/12

(51) Int. Cl.⁶: **H04N 1/00**, H04N 1/40

(21) Application number: 98114667.3

(22) Date of filing: 04.08.1998

(84) Designated Contracting States:
AT BE CH CY DE DK ES FI FR GB GR IE IT LI LU
MC NL PT SE
Designated Extension States:
AL LT LV MK RO SI

(30) Priority: 19.09.1997 JP 273657/97

(72) Inventors:
• Nagoshi, Kouichi
Kawasaki-shi, Kanagawa 213 (JP)
• Honda, Kiyohiko
Adachi-ku, Tokyo 121 (JP)

(71) Applicant:
Matsushita Graphic Communication Systems,
Inc.
Tokyo 153 (JP)

(74) Representative:
Grünecker, Kinkeldey,
Stockmair & Schwanhäusser
Anwaltssozietät
Maximilianstrasse 58
80538 München (DE)

### (54) Image processing system

(57) Facsimile apparatus 1 transmits scanning control information including common user setting information and image processing information to host computer 2. Host computer 2 extracts user setting information from the received scanning control information to display, and updates the image processing information by referring a user changed setting value in the user setting information to transmit to facsimile apparatus 1. Facsimile apparatus 1 executes the image processing of scanned data based on the received image processing information. And facsimile apparatus 1 transmits scanned data to which image processing executable in a facsimile apparatus side is executed to host computer 2, and host computer 2 executes image processing unexecutable in a facsimile apparatus side to the received scanned data.

FIG. 1

EP 0 903 928 A2

## Description

## BACKGROUND OF THE INVENTION

### Field of the Invention

The present invention relates to an image processing system in which a scanner and a host computer connected, and it executes the image processing to the scanned data.

### Description of the Related Art

Recently it is becoming popular that an image processing system in which a scanner and a host computer such as a personal computer are connected, and it executes the image processing to the scanned data.

In a conventional image processing system, the whole image processing of scanned data is executed at a scanner based on the scanning control information set by a host computer, and the completely processed scanned data is inputted to the host computer.

The scanning control information is stored in a hard disk (hereinafter referred as "HD") with scanner driver software (hereinafter referred as "SD software") corresponding to the scanning control information.

However in the conventional image processing system described above, in the case where scanners with different specifications are connected to a host computer, although the image processing contents are the same, it is necessary to store each SD software corresponding to the scanning control information of each scanner, which requires a large capacity of HD to store the data.

And since the image processing of scanned data is executed in an image processing section of a scanner with less image processing functions than a host computer, the enough image processing is not executed to scanned data with a large data amount such as color image.

Further in the case of a facsimile apparatus with a scanner having a printer, since the image processing appropriate for the printer is not executed, in the case where scanned data is outputted to the printer after it is inputted to the host computer, the image quality of the outputted image is poorer than the case where a document is copied in a facsimile apparatus.

## SUMMARY OF THE INVENTION

The first object of the present invention is to provide an image processing system in which the image processing appropriate for the characteristics of each scanner can be executed, without installing each scanner driver software of all scanners connected to a host computer.

The object of the present invention described above is achieved by, capturing a user set value of the user setting information common to scanners with different specifications to update the image processing information in a host computer, and by executing the image processing of the scanned data based on the image processing information received from the host computer.

And the second object of the present invention is to provide an image processing system in which the high image quality can be achieved by executing enough image processing to scanned data with a large data amount.

The object of the present invention described above is achieved by transmitting the scanned data to which the image processing executable in a scanner is executed to a host computer and by executing the image processing unexecutable in the scanner to the received scanned data in the host computer.

## BRIEF DESCRIPTION OF THE DRAWINGS

FIG.1 is a block diagram illustrating a schematic configuration of an image processing system in the first embodiment of the present invention;

FIG.2 is a model diagram illustrating the scheme of the scanning control information in an image processing system in the first embodiment of the present invention;

FIG.3 is a flow chart illustrating the display processing of the user setting information in an image processing system in the first embodiment of the present invention;

FIG.4 is a display diagram illustrating an example of the user setting information indicated on a CRT display in an image processing system in the first embodiment of the present invention;

FIG.5 illustrates diagrams of the properties of the gamma-correction curves used in an image processing system in the first embodiment of the present invention;

FIG.6 and FIG.7 are flow charts illustrating the image processing for display in an image processing system in the first embodiment of the present invention; and

FIG.8 and FIG.9 are flow charts illustrating the image processing for printer in an image processing system in the second embodiment of the present invention.

## DESCRIPTION OF THE PREFERRED EMBODIMENT

The embodiments of the present invention are explained with reference to drawings in the following.

(First Embodiment)

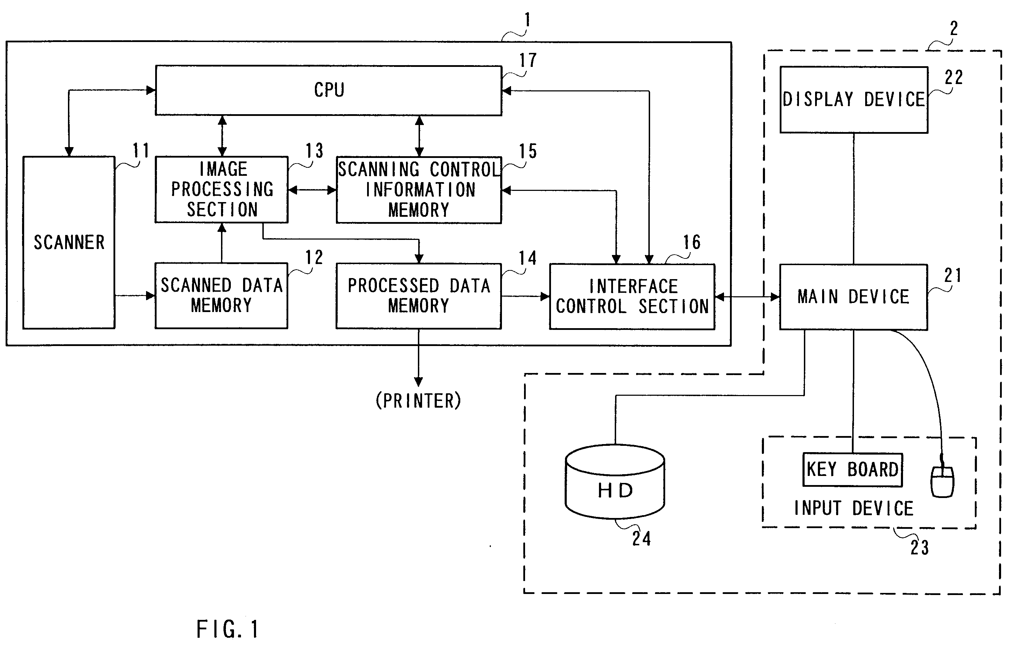

FIG.1 is a block diagram illustrating a schematic configuration of an image processing system in the first embodiment of the present invention. As illustrated in FIG.1, the image processing system is composed of at least one of facsimile apparatus 1 and host computer 2.

Facsimile apparatus 1 is primarily composed of scanner 11 for scanning a document, scanned data memory 12 for storing the scanned data, image processing section 13 for executing the image processing of the scanned data, processed data memory 14 for storing the image processed data, scanning control information memory 15 for storing scanning control information, CPU 17 for control the whole device, and interface section 16 for transmitting and receiving data with host computer 2.

And host computer 2 is primarily composed of main device 21 for controlling the whole device by running various kinds of software, display device 22 for displaying various kinds of information on a CRT screen, inputting device 23 for a user to input an instruction, and hard disk (hereinafter referred as "HD") 24 for memorizing data.

Main device 21 are connected to display device 22, inputting device 23 and HD 24 separately. And main device 21 is connected to interface section 16 of facsimile apparatus 1, via which it transmits and receives data with facsimile apparatus 1.

When the scanner driver software (hereinafter referred as "SD software") is started up in main device 21, the scanning control information can be transmitted and received between facsimile apparatus 1 and host computer 2.

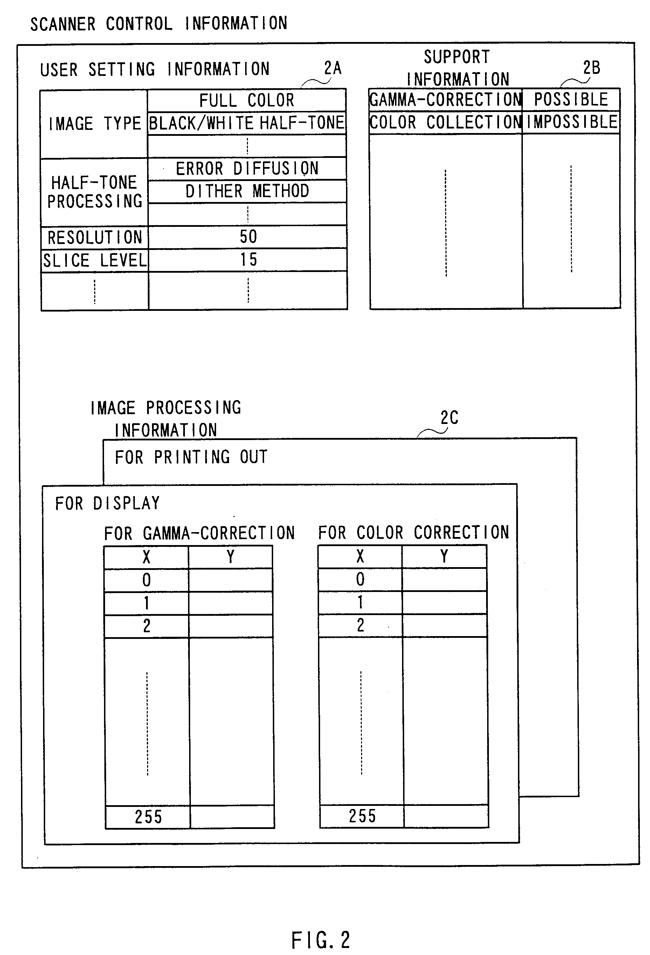

FIG.2 is a model diagram illustrating the scheme of the scanning control information in an image processing system in the first embodiment of the present invention.

As illustrated in FIG.2, the scanner information includes user setting information 2A indicated on a CRT screen for a user to set, support information 2B indicating the image processing content supported by facsimile apparatus 1, and image processing information 2C indicating the relation of output Y to input X in each kind of image processing.

User setting information 2A is composed of a type of image types such as full color and 256 gray scale, a kind of half-tone processing such as error diffusion and a dither method, a setting range of resolution like 50 dpi up to 300 dpi, items of image processing parameter such as slice level, lightness, contrast, curve, chroma, hue and edge emphasis, and a range of each setting value like -15 up to 15.

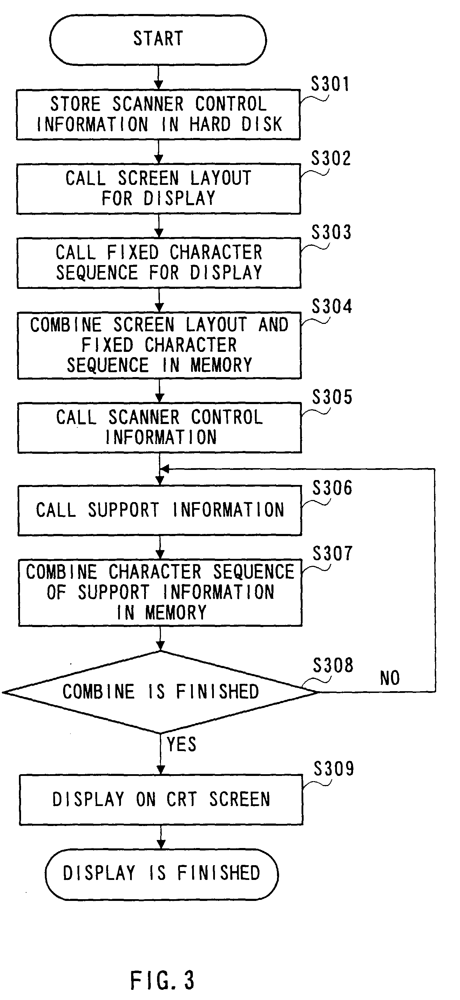

The display processing for the user setting information is explained with a flow chart in FIG.3 in the following.

First a user starts up SD software, and the scanning control information stored in scanning control information memory 15 in facsimile apparatus 1 is stored in HD 24 in a host computer (S301).

Next a screen layout for the display of the user setting information is called from HD 24 (S302), a fixed character sequence for the display is called form HD 24 (S303) and they are combined in memory for display in main device 21 (S304).

Next the scanning control information stored in HD 24 is called (S305), each user setting information supported by a facsimile apparatus is called (S306), and they are combined for a screen layout in memory for display (307).

After all kinds of user setting information are combined (S308), they are displayed on a CRT screen in display device 22 (S309).

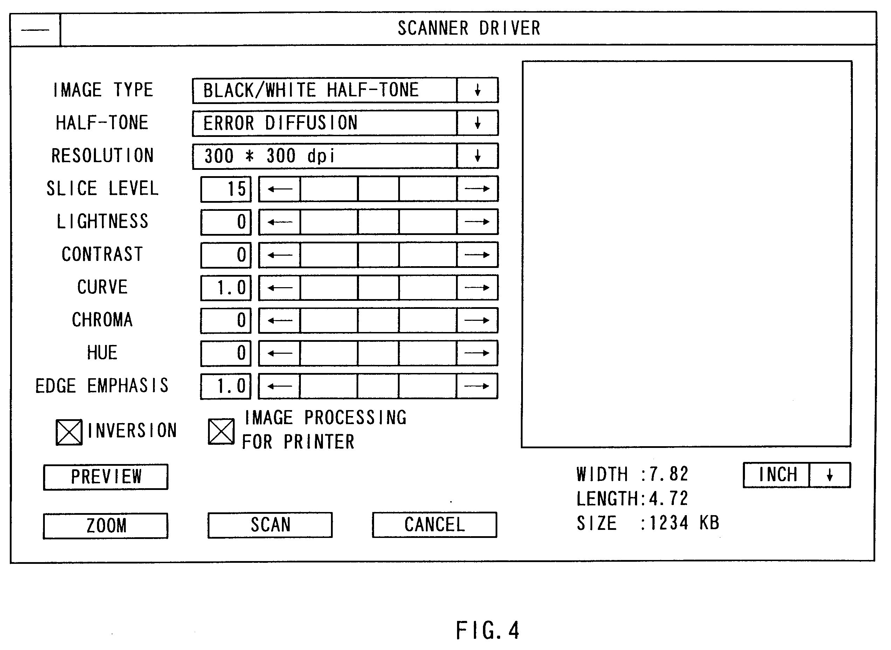

FIG.4 is a display diagram illustrating an example of the user setting information indicated on a CRT display in an image processing system in the first embodiment of the present invention. As illustrated in FIG.4, on a CRT screen, each kind of user setting information such as image type, half-tone, resolution, slice level, lightness, contrast, curve, chroma, hue and edge emphasis is displayed.

Thus, since the user setting information is displayed on the same layout screen by using a single kind of SD software, it is not necessary to keep other memory area for different kinds of SD software in a hard disk.

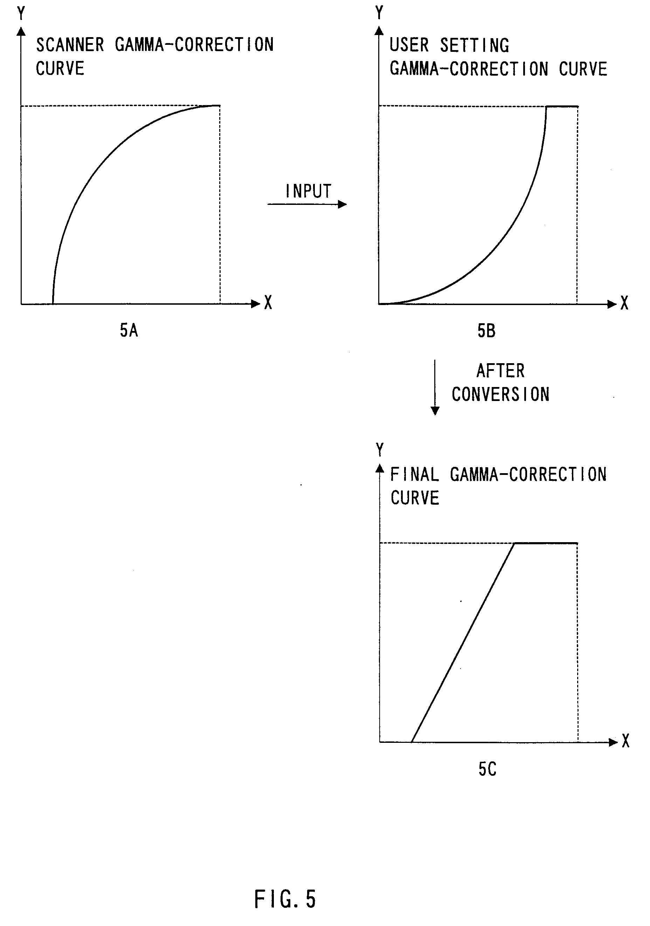

Concerning the image processing to scanned data, as an example of the image processing, an explanation is given to the gamma-correction, one of image processing, used to correct lightness and a contrast curve in the following. FIG.5 illustrates diagrams of the properties of the gamma-correction curves used in an image processing system in the first embodiment of the present invention.

The property curve illustrated in FIG.5A is a scanner gamma-correction curve indicating the relation of output Y to input X of the image processing information written in a gamma-correction table to correct the scan property of a facsimile apparatus (hereinafter referred as "scanner gamma-correction table").

In an image processing system, the gamma-correction is executed to scanned data using the scanner gamma-correction table corresponding to the different scan property for each facsimile apparatus. For instance, in the case of a facsimile with the property that scanned data is lighter than image of a document, the gamma-correction is executed using the scanner gamma-correction table to thicken the document.

Thus, by executing the image processing corresponding to the scan property of each facsimile, the faithful image to the original image can be acquired.

However the scanner gamma-correction table is to gamma-correct only the scan property of a facsimile apparatus and not intended to correct properties of other output devices such as a printer and a display. And a user can not change the setting of a scanner gamma-correction table.

Accordingly, in the case where a user arranges the display or the image to output, a scanner gamma-correction table is modified by considering the property of an output device so as to execute the gamma-correction corresponding to the scanned data required by a user.

Output Y in a gamma-correction table that a user sets (hereinafter referred as "user set gamma-correction table") is obtained by substituting the values of lightness (b), contrast (c) and curve (γ) of the user setting information in the formulation (1) shown below, where Y and X are respectively an output and input in the scanner gamma-correction table.

$$Y = \frac{\{\tan(k1+c) \times (X+k2+b)+k2+b\}^\gamma}{k3^{(\gamma-1)}} \quad (1)$$

The property curve illustrated in FIG.5B is a user set gamma-correction curve indicating the relation of output Y to input X in a user set gamma-correction table.

A final gamma-correction table used for the image processing is a gamma-correction table indicating the relation of output Y in a user set gamma-correction table to input x in a scanner gamma-correction table.

The property curve illustrated in FIG.5C is a final gamma-correction curve indicating the relation of output Y to input X in a final gamma-correction table.

Thus, the image required by a user can be acquired with a single kind of SD software by combining a scanner image processing table for correcting the property of a scanner in each facsimile apparatus with a user setting image processing table to correct for the property of an output device and user setting information to generate a final image processing table, and executing the image processing of scanned data using the image processing information written in the final image processing table.

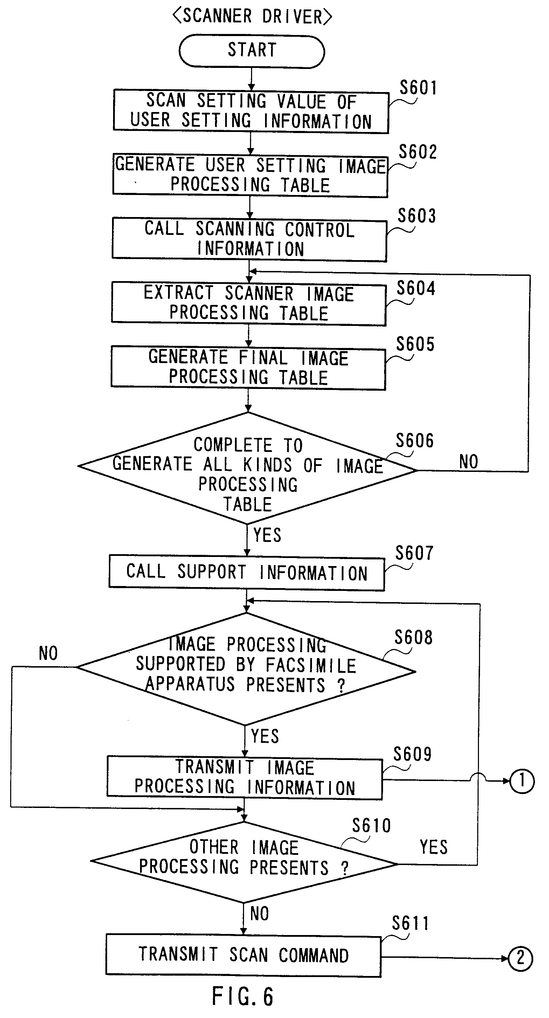

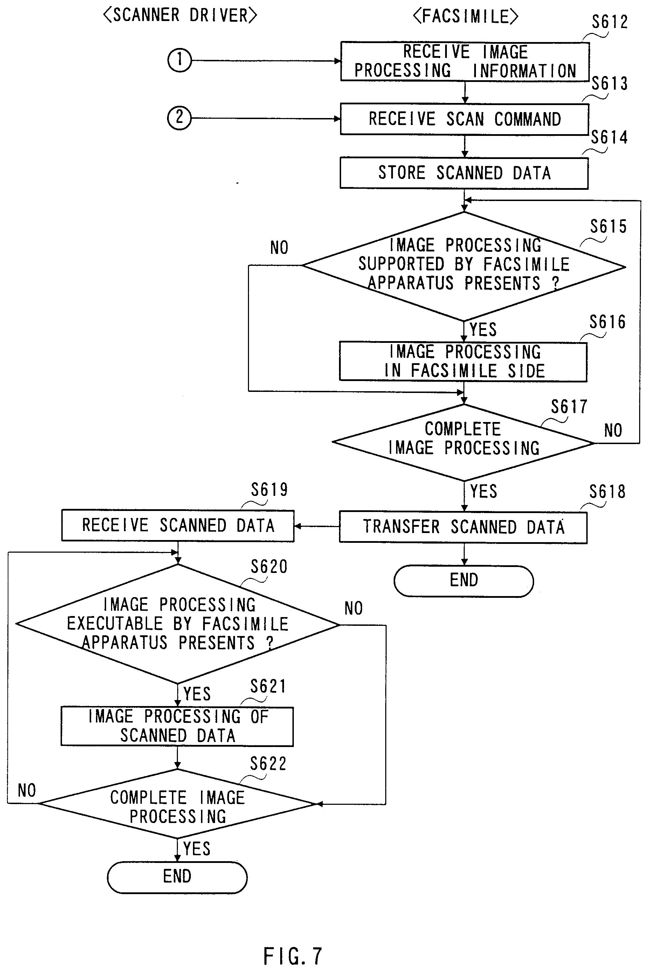

Next, flow charts illustrated in FIG.6 and FIG.7 are used to explain the image processing for display in an image processing system in the embodiment of the present invention.

First a user clicks a button of "scan" on the display illustrated in FIG.4 with input device 23 such as a mouse, the setting values of user setting information selected on the display such as lightness, contrast, curve, chroma, hue, edge emphasis and half-tone are scanned (S601), based on which a user setting image processing table such as gamma-correction is generated (S602).

Next, scanning control information is called from HD 24 (S603), a scanner image processing table is extracted from the scanning control information (S604), and a final image processing table is generated by combining a scanner image processing table and a user setting image processing table (S605).

The steps of S604 and S605 are completed in all kinds of image processing (S606), support information is called from scanning control information by SD software (S607), host computer 2 decides whether or not each kind of image processing is executable in facsimile apparatus 1 (S608). And in the case where it is executable, image processing information written in a scanner image processing table corresponding to the image processing is transmitted from host computer 2 to facsimile apparatus 1 (S609).

The steps of S608 and S609 are completed in all kinds of image processing (S610), a scan command is transmitted from host computer 2 to facsimile apparatus 1 (S611).

After image processing information is received in facsimile apparatus 1 and stored in scanning control information memory 15 (S612), a scan command is received (S613), a document is scanned in scanner 11, and scanned data is stored in scanned data memory 12 (S614).

Next, in image processing section 13, it is decided whether or not each kind of image processing is supported in facsimile apparatus 1 using the support information in the scanning control information (S615). And in image processing section 13, the kind of image processing supported by facsimile apparatus 1 is executed to the scanned data stored in scanned data memory 12 based on the image processing information stored in scanning control information memory 15, and the processed data is stored in processed data memory 14 (S616).

The steps of S615 and S616 are completed in all kinds of image processing supported by facsimile apparatus 1 (S617), the scanned data is transferred from facsimile apparatus 1 to host computer 2 (S618).

The scanned data is transferred to host computer 2 (S619), the support information in the scanning control information is called from HD 24 in host computer 2 again by SD software, it is decided in host computer 2 whether or not each kind of image processing is supported by facsimile apparatus 1 (S620), and the kind of image processing not supported by facsimile apparatus 1 is executed in host computer 2 (S621).

The steps of S620 and S621 are completed in all kinds of image processing not supported by facsimile apparatus 1 are completed (S622), and the scanned data, to which the image processing is completed, is displayed on a CRT screen.

Thus, since the image processing not supported by a facsimile apparatus are supplemented by host computer 2, the high image quality of scanned data, even scanned data with a large data amount such as color image, can be achieved by executing enough image processing.

In addition, although a facsimile apparatus is explained as a scanner in the first embodiment, the present invention is not limited by that and the same effect can be achieved by using another scanner.

(Second Embodiment)

Next, an explanation is given to the case where scanned data given the image processing is once scanned in a host computer and outputted to a printer.

The difference between the first and second embodiments is concerning the image processing information to output scanned data to a printer (hereinafter referred as "image processing information for printer"), which included in scanning control information received from a facsimile apparatus is used in the second embodiment without generated using SD software.

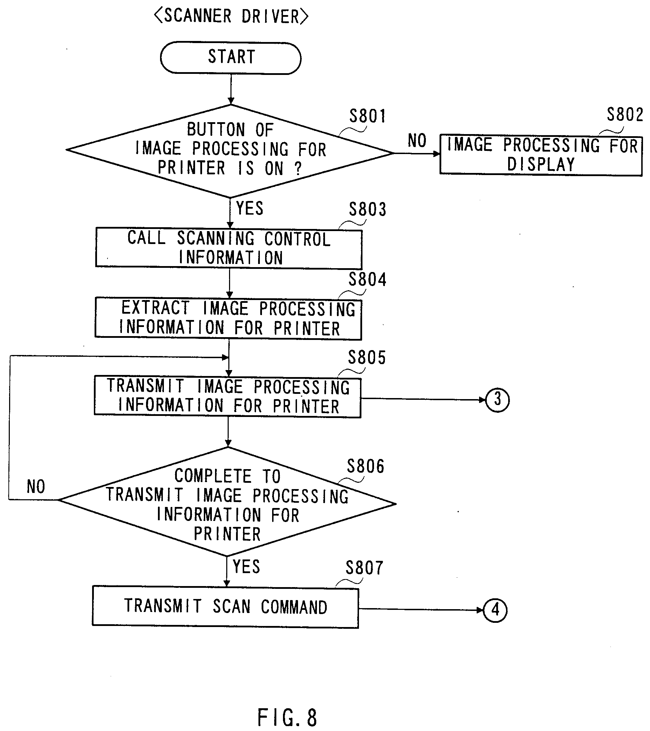

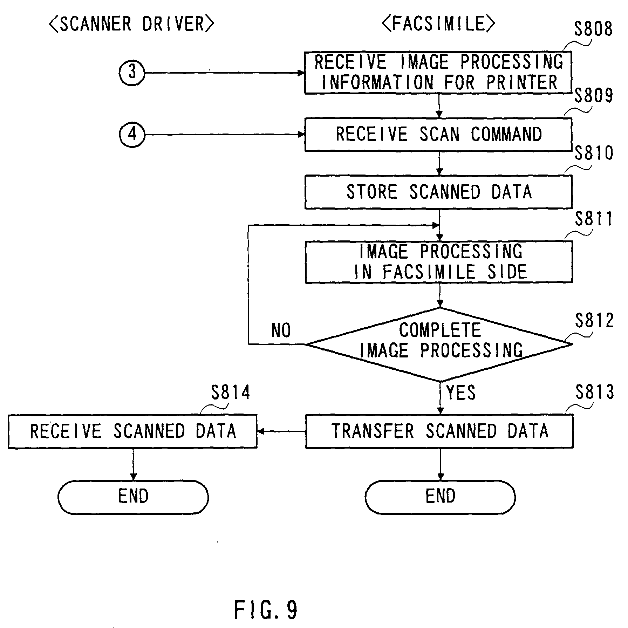

FIG.8 and FIG.9 are flow charts illustrating the image processing for display in an image processing system in the second embodiment of the present invention.

First a user clicks a button of "scan" on a screen illustrated in FIG.4 using input device 23 such as a mouse, and ON or OFF for the setting of a button of "image processing for printer" is scanned in SD software (S801). And in the case of OFF for the setting of a button of "image processing for printer", the image processing for display illustrated in FIG.6 and FIG.7 are executed (S802).

In the case of ON for the setting of a button of "image processing for printer", the scanning control information is called from HD 24 with the SD software (S803), a scanner image processing table for printer is extracted from the scanning control information (S804), and the image processing information for printer written in the image processing table for printer is transmitted to facsimile apparatus 1 (S805). After the transmission of the image processing information for printer is completed (S806), a scan command is transmitted to facsimile apparatus 1 (S807).

In facsimile apparatus 1, after the image processing information for printer is received from a host computer, the scan command is received (S809), then a document is scanned from scanner 11 and stored as scanned data in scanned data memory 12 (S810).

Next, in facsimile apparatus 1, the image processing is executed based on the information of the image processing table for printer received from host computer 2, and the completely processed data is stored in processed data memory 14 (S811). In addition, in the second embodiment, all kinds of image processing are executed in facsimile apparatus 1.

The step of S811 is completed in all kinds of image processing (S812), and the scanned data is transferred from facsimile apparatus 1 to host computer 2 (S813). In addition, in host computer 2, the scanned data transmitted from facsimile apparatus is only received and the image processing is not executed (S814).

When all scanned data are received in host computer 2, by performing the prescribed operation in input device 23, a user can display the scanned data on a CRT screen and output it from a printer in a facsimile apparatus.

Thus, by executing the image processing of scanned data based on the image processing information for printer, the high image quality can be obtained even in the case of outputting scanned data to a printer in a facsimile apparatus after it is once inputted in a host computer as well as in the case of coping it in a facsimile apparatus.

**Claims**

1. An image processing system comprising:

   at least one of scanner(1) for scanning a document; and
   a host computer(2) connected to said scanner, wherein said host computer(2) captures a setting value of user setting information common to the scanners with different specifications to update image processing information, and said scanner(1) executes image processing to scanned data of the document according to said image processing information received from said host computer(2).

2. The image processing system according to claim 1, wherein said scanner memorizes scanning control information including the user setting information and the image processing information in a memory, and said host computer extracts the user setting information from said scanning control information, combines the information with a template layout to display on a screen, captures a setting value in said user setting information, and updates said image processing information.

3. The image processing system according to claim 1, wherein said scanner memorizes in a memory a first correction information corresponding to a property of the scanner, and said host computer memorizes in a memory a second correction information corresponding to requirement by a user taking into account a property of an output device, modifies the second correction information using the captured setting value in said user setting information, and updates said image processing information by combining said second correction information modified and said first correction information.

4. The image processing system according to claim 1, wherein said scanner memorizes support information indicating a kind of image processing executable in said scanner, and said host computer transmits the image processing information indicated in the support information to said scanner.

5. The image processing system according to claim 4, wherein said scanner transmits scanned data to which the image processing executable in said scanner is executed, and said host computer executes the image processing unexecutable in said scanner to the received scanned data.

6. The image processing system according to claim 1,wherein said scanner is connected to a printer to output scanned data and memorizes image processing information for the printer in a memory, said host computer displays on a screen a button of image processing for printer which accepts whether or not image processing for printer is executed, and in the case where a setting for the button of image processing for printer indicates valid, provides an instruction of the image processing for printer to said scanner, and in the case of receiving said instruction, image processing means in said scanner executes the image processing to scanned data based on said image processing information for printer.

7. A scanner comprising:

   memory means(15) for memorizing scanning control information including user setting information common to devices with different specifications and image processing information, transmitting means(16) for transmitting said scanning control information in said memory means to a host computer; and image processing means(13) for executing image processing of scanned data based on the image processing information in the scanning control information received from said host computer.

8. A facsimile apparatus comprising:

   scan means for scanning a document; a printer for outputting scanned data; memory means for memorizing scanning control information including image processing information for display and image processing information for printer; transmitting means for transmitting said scanning control information in said memory means to a host computer; and image processing means for, in the case of receiving an instruction for the image processing for printer from said host computer, executing the image processing of said scanned data based on said image processing information for printer.

9. A host computer comprising:

   extracting means for extracting user setting information from scanning control information received from a scanner; display means for displaying a screen in which the user setting information extracted is combined in a fixed layout; information capturing means for capturing a setting value in said user setting information to update image processing information; and transmitting means for transmitting said image processing information updated to said scanner.

10. A memory medium readable by device, wherein in said medium a program to instruct a host computer to scan scanning control information from a scanner, extract user setting information from the scan scanning control information, display a fixed layout combined with the extracted setting information, in the case where a setting value in said information is changed by a user, set the new image processing information by referring said setting valued and transmit the scanner information including said new image processing information.

FIG. 1

SCANNER CONTROL INFORMATION

USER SETTING INFORMATION    2A

| IMAGE TYPE | FULL COLOR |
|---|---|
| | BLACK/WHITE HALF-TONE |
| | ⋮ |
| HALF-TONE PROCESSING | ERROR DIFFUSION |
| | DITHER METHOD |
| | ⋮ |
| RESOLUTION | 50 |
| SLICE LEVEL | 15 |
| ⋮ | ⋮ |

SUPPORT INFORMATION    2B

| GAMMA-CORRECTION | POSSIBLE |
|---|---|
| COLOR COLLECTION | IMPOSSIBLE |
| ⋮ | ⋮ |

IMAGE PROCESSING INFORMATION    2C

FOR PRINTING OUT

FOR DISPLAY

FOR GAMMA-CORRECTION

| X | Y |
|---|---|
| 0 | |
| 1 | |
| 2 | |
| ⋮ | |
| 255 | |

FOR COLOR CORRECTION

| X | Y |
|---|---|
| 0 | |
| 1 | |
| 2 | |
| ⋮ | |
| 255 | |

FIG. 2

START

STORE SCANNER CONTROL
INFORMATION IN HARD DISK    S301

CALL SCREEN LAYOUT
FOR DISPLAY    S302

CALL FIXED CHARACTER
SEQUENCE FOR DISPLAY    S303

COMBINE SCREEN LAYOUT AND
FIXED CHARACTER
SEQUENCE IN MEMORY    S304

CALL SCANNER CONTROL
INFORMATION    S305

CALL SUPPORT INFORMATION    S306

COMBINE CHARACTER SEQUENCE
OF SUPPORT INFORMATION
IN MEMORY    S307

COMBINE IS FINISHED    S308    NO

YES

DISPLAY ON CRT SCREEN    S309

DISPLAY IS FINISHED

FIG. 3

FIG. 4

EP 0 903 928 A2

FIG. 5

11

<SCANNER DRIVER>

START

SCAN SETTING VALUE OF
USER SETTING INFORMATION ⟶ S601

GENERATE USER SETTING IMAGE
PROCESSING TABLE ⟶ S602

CALL SCANNING CONTROL
INFORMATION ⟶ S603

EXTRACT SCANNER IMAGE
PROCESSING TABLE ⟶ S604

GENERATE FINAL IMAGE
PROCESSING TABLE ⟶ S605

COMPLETE TO
GENERATE ALL KINDS OF IMAGE
PROCESSING
TABLE ⟶ S606    NO

YES

CALL SUPPORT INFORMATION ⟶ S607

IMAGE PROCESSING
SUPPORTED BY FACSIMILE
APPARATUS PRESENTS ? ⟶ S608    NO

YES

TRANSMIT IMAGE
PROCESSING INFORMATION ⟶ S609    ①

OTHER IMAGE
PROCESSING PRESENTS ? ⟶ S610    YES

NO

TRANSMIT SCAN COMMAND ⟶ S611    ②

FIG. 6

<SCANNER DRIVER>    <FACSIMILE>    S612

① ⟶ RECEIVE IMAGE PROCESSING INFORMATION

S613

② ⟶ RECEIVE SCAN COMMAND

S614

STORE SCANNED DATA

S615

IMAGE PROCESSING SUPPORTED BY FACSIMILE APPARATUS PRESENTS ?　NO

YES　S616

IMAGE PROCESSING IN FACSIMILE SIDE

S617

COMPLETE IMAGE PROCESSING　NO

YES　S618

S619

RECEIVE SCANNED DATA ⟵ TRANSFER SCANNED DATA

END

S620

IMAGE PROCESSING EXECUTABLE BY FACSIMILE APPARATUS PRESENTS ?　NO

YES　S621

IMAGE PROCESSING OF SCANNED DATA

S622

NO　COMPLETE IMAGE PROCESSING

YES

END

FIG. 7

13

<SCANNER DRIVER>

```
        ┌─────────────┐
        │    START    │
        └──────┬──────┘
               │
               ▼
         ╱──────────╲                                S802
  S801  ╱  BUTTON OF  ╲     NO    ┌────────────────────────┐
       ╱IMAGE PROCESSING╲────────▶│ IMAGE PROCESSING FOR   │
       ╲  FOR PRINTER   ╱         │        DISPLAY         │
        ╲   IS ON ?    ╱          └────────────────────────┘
         ╲──────────╱
               │ YES          S803
               ▼
       ┌──────────────────────┐
       │ CALL SCANNING CONTROL│
       │     INFORMATION      │
       └──────────┬───────────┘
                  │              S804
                  ▼
       ┌──────────────────────┐
       │ EXTRACT IMAGE PROCESSING│
       │ INFORMATION FOR PRINTER │
       └──────────┬───────────┘
                  │              S805
                  ▼
       ┌──────────────────────┐
       │ TRANSMIT IMAGE PROCESSING│──────────▶ ③
       │ INFORMATION FOR PRINTER │
       └──────────┬───────────┘
                  │
                  ▼
            ╱──────────╲         S806
       NO  ╱ COMPLETE TO ╲
      ◀───╱TRANSMIT IMAGE ╲
          ╲ PROCESSING     ╱
          ╲INFORMATION FOR ╱
           ╲  PRINTER     ╱
            ╲──────────╱
                  │ YES         S807
                  ▼
       ┌──────────────────────┐
       │  TRANSMIT SCAN COMMAND │──────────▶ ④
       └──────────────────────┘
```

FIG. 8

⟨SCANNER DRIVER⟩                    ⟨FACSIMILE⟩          S808

③ ─────────────────────→  RECEIVE IMAGE PROCESSING
                           INFORMATION FOR PRINTER      S809

④ ─────────────────────→     RECEIVE SCAN COMMAND
                                                        S810

                              STORE SCANNED DATA
                                                        S811

                               IMAGE PROCESSING
                               IN FACSIMILE SIDE

                NO             COMPLETE                  S812
                ◄─────────  IMAGE PROCESSING

S814                             YES                     S813

RECEIVE SCANNED DATA  ◄─────  TRANSFER SCANNED DATA

      END                          END

FIG. 9